# EUROPÄISCHE PATENTSCHRIFT

(11) **EP 1 117 526 B1**
(45) Veröffentlichungstag und Bekanntmachung des Hinweises auf die Patenterteilung: **06.11.2002**
(21) Anmeldenummer: 99944489.6
(22) Anmeldetag: 24.08.1999
(51) Int. Cl.: B32B 5/18, B32B 27/32, B65D 65/40

(54) **VERPACKUNGSMATERIAL MIT EINER SCHICHT AUS GESCHÄUMTEM POLYOLEFIN**
PACKAGING MATERIAL WITH A FOAMED POLYOLEFIN LAYER
MATERIEL D'EMBALLAGE COMPORTANT UNE COUCHE DE POLYOLEFINE MOUSSEE

(30) Priorität: 02.09.1998 DE 19840046
(43) Veröffentlichungstag der Anmeldung: 25.07.2001
(73) Patentinhaber: CFS GmbH Kempten, 87437 Kempten (DE)
(72) Erfinder: REINERS, Ulrich, NL-5802 BC Venray (NL); PITTET, Michel, CH-1681 Billens (CH)
(74) Vertreter: Kutzenberger, Helga, Dr.
(86) Internationale Anmeldenummer: EP9906191
(87) Internationale Veröffentlichungsnummer: WO00013886

(56) Entgegenhaltungen:
- EP-A- 0 570 222
- WO-A-96/25290

## Beschreibung

Die Erfindung liegt auf dem Gebiet der Verpackungsindustrie und betrifft Verpackungsmaterial, das aus einer geschäumten Polyolefinschicht aus Propylen-, Homo- und/oder Copolymeren oder deren Mischungen besteht, die auf einer ihrer Oberflächen weitere Schichten aufweist.

Verpackungsmaterialien mit einer Schaumschicht aus beispielsweise Polypropylen in Form von quasi endlosen, aufgerollten Bahnen werden zur Herstellung von thermogeformten, selbsttragenden Verpackungen wie beispielsweise Mulden für die Verpackung von Nahrungsmitteln verwendet. Dazu können derartige Verpackungsmaterialien auf sogenannten "FFS-Maschinen" (Form-Füll-Siegelmaschinen) zu Packungen verarbeitet werden. Dazu wird das bahnförmige Verpackungsmaterial in eine Vorrichtung eingespeist, dort zu einer Bahn aus Mulden geformt wird, in die Mulden das Verpackungsgut gefüllt und mit einem vorzugsweise transparenten Film durch Versiegeln verschlossen. In der Regel werden dann die Mulden voneinander getrennt.

Bei den bekannten Verpackungsmaterialien ist die Schicht aus geschäumtem Polyolefin zumindest auf einer Oberflächenseite mit weiteren Schichten versehen. Je nach Zusammensetzung und Dicke dieser Schichten können diese die Steifheit des Verpackungsmaterials erhöhen und/oder als Schutz der Schaumstoffoberfläche oder als Gas- undloder Aromabarriere und/oder als eine Oberflächenschicht zur Verbindung einer Verpackungsmulde und einer vorzugsweise transparenten Deckelfolie dienen.

Verpackungsmaterialien mit einer Schicht aus geschäumtem Polypropylen zur Herstellung von Mulden durch Wärmeverformung sind beispielsweise in der EP-A- 0 570 222 beschrieben. Diese Materialien umfassen eine Schaumschicht und eine mehrschichtige Verbundfolie, die ggf. eine Barriereschicht, die das Verpackungsmaterial gas- und aromadicht macht, enthalten kann. Dieses mehrschichtige Verpackungsmaterial weist für selbsttragende Verpackungen nicht immer die gewünschten Eigenschaften auf.

Es wurde auch vorgeschlagen, die Schaumschicht mit der Mehrschichtfolie mit Hilfe einer Verbindungsschicht herzustellen, die aus einem Polyolefin aufgebaut ist, das auf dem Hauptmonomer des Polyolefins der Schaumschicht aufgebaut ist (WO 96/25290). Obwohl man dadurch eine ausgezeichnete Haftung zwischen der Schaumschicht und der Mehrschichtfolie erreicht, ist ein solches Verpackungsmaterial für einige Anwendung nicht steif genug, insbesondere bei selbsttragenden Verpackungsbehältern.

Es besteht daher ein Bedarf, die Steifigkeit von solchen Verpackungsbehältern, vorzugsweise Verpackungsmulden, zu verbessern, ohne dabei die Dicke des Verpackungsmaterials erhöhen zu müssen. Außerdem besteht ein Bedarf neben der Verbesserung der mechanischen Eigenschaften ein Verpackungsmaterial zur Verfügung zu stellen, das in einem breiteren Temperaturbereich thermoverformt werden kann, um so die Produktion von Verpackungsbehältern zu beschleunigen.

Diese Aufgabe wird erfindungsgemäß gelöst, indem man einen mehrschichtigen Film zur Verfügung stellt, der folgende Sequenz von Schichten aufweist:
A) eine Basisschicht aus geschäumten Propylen-, Homo- und/oder Copolymeren oder deren Mischungen
B) eine Schicht bestehend aus wenigstens einem Polyolefin der Schaumschicht A)
C) ggf. eine Verbindungsschicht basierend auf einem Polyolefin, das vorzugsweise auf demjenigen Monomer basiert, das das Hauptmonomer des Polyolefins der Schaumschicht A) ist,
D) ggf. eine Haftvermittlerschicht,
E) ggf. eine gas- und/oder aromadichte Barriereschicht,
F) eine Haftvermittlerschicht,
G) eine ggf. siegelfähige und/oder peelfähige Oberflächenschicht
wobei die Gesamtdicke der Schichten A) und B) im Bereich von 0,5 bis 2 mm und die Dicke der Schicht B) im Bereich von ¹/₆ bis ½ der Dicke der Schicht A) liegt.

Vorzugsweise ist die Gesamtdicke der Schichten A) und B) im Bereich von 0,6 bis 1,4 mm und die Dicke der Schicht B) im Bereich von ¹/₆ bis ¹/₃ der Dicke der Schicht A).

Für die Herstellung von Verpackungen, wie beispielsweise Schalen für die Verpackung von Lebensmitteln besteht die Schaumschicht A) aus, geschäumten Propylen-, Homo- und/oder Copolymere, da diese Materialien bereits mit einer geringen Dicke und einer geringen Dichte selbsttragend sind. Es ist auch möglich, zur Herstellung der Schaumschicht Mischungen von Polypropylenen einzusetzen. Dabei eignet sich insbesondere eine Mischung aus Polypropylen mit Langkettenverzweigung und damit hoher Schmelzfestigkeit und einem Propylenethylencopolymer, wie z. B. einem heterophasigen Propylen-Ethylen-Blockcopolymeren. Insbesondere eignet sich eine Mischung aus einem Polypropylen mit einer Langkettenverzweigung und einem Schmelzindex MFI im Bereich von 1,4 bis 4,2 g/10 min und einem heterophasigen Propylen-Ethylen-Blockcopolymer in einem Mischungsverhältnis von 1:1.

Die Verschäumung des Polypropylens der Schicht A) kann durch Zugabe von festen, flüssigen und/oder gasförmigen Verschäumungsmitteln erfolgen, die in üblichen Mengen, vorzugsweise in einer Menge von 0,5 bis 3 Gew.% dem Polyolefin zugegeben werden. Dabei wird auf die Offenbarung in EP-A- 0 570 222 Bezug genommen, die hiermit eingeführt wird.

Schaumschichten aus Polypropylen ggf. in Mischung mit Polyolefincopolymeren, vorzugsweise Propylen-Ethylen-Copolymeren, die zur Herstellung von Verpackungsartikeln verwendet werden, haben vorzugsweise eine Dichte von 0,1 bis 0,8 g/cm³, besonders bevorzugt 0,25 bis 0,5 glcm³ und weisen eine Zellenzahl von 75 bis 300 Zellen/mm³ auf. Die Dichte und die Zellenzahl kann durch die Verfahrensparameter, wie z. B. der Extrusionstemperatur oder andere Verfahrensparameter während der vorzugsweisen Herstellung der Schaumschicht durch Extrusion und Expansion variiert werden.

Die Schicht B) aus kompaktem Polyolefin besteht im wesentlichen aus einem Polypropylen der geschäumten Basisschicht A). Sofern diese Basisschicht aus geschäumtem Polypropylen oder einer geschäumten Mischung aus Polypropylen und Propylen-Ethylen-Copolymer besteht, besteht die kompakte Polyolefinschicht B) vorzugsweise aus Polypropylen oder einem Propylen-Ethylen-Copolymer. Besonders bevorzugt ist ein heterophasiges Propylenethylen Blockcopolymers. Der Schmelzindex (MFI) der zur Herstellung der Schicht B) verwendeten Polyolefine liegt vorzugsweise im Bereich von 1,8 bis 5,5 g/10 min. Die Dicke der Schicht B) beträgt ¹/₆ bis ½, besonders bevorzugt ¹/₆ bis ¹/₃ der Dicke der Schicht A).

Die Schicht C) ist vorhanden, sofern die Schichten D) bis G) durch Coextrusion, vorzugsweise durch Folienblascoextrusion, vorgefertigt werden und mit den übrigen Schichten zu verbinden sind. Die Schicht C) basierend auf einem Polyolefin, das vorzugsweise aus einem Monomer hergestellt wurde, das auch das Hauptmonomer der Polypropylene der Schaumschicht A) ist. Sofern daher die Schicht A) aus einem verschäumten Polypropylen und ggf. einem Propylen-Ethylen-Copolymer besteht, kann die Schicht C) aus Polypropylen bestehen, das ggf. mit Maleinsäureanhydrid gepfropft ist. Auch Copolymere aus Ethylen/Vinylacetat können als Material der Schicht C) verwendet werden. Die Dicke der Schicht C) beträgt vorzugsweise 5 bis 25, besonders bevorzugt 8 bis 15 µm.

Sofern die erfindungsgemäßen Mehrschichtfilme eine geringe Gasdurchlässigkeit, d. h. geringe Sauerstoff- und Feuchtigkeitsdurchlässigkeit sowie einen Aromaschutz aufweisen sollen, weisen sie eine Barriereschicht E) auf. Diese Barriereschicht ist vorzugsweise aus einem Ethylenvinylalkoholcopolymer, das einen Ethylengehalt von 32 bis 45 Mol%, vorzugsweise 35 bis 42 Mol%, aufweist. Die Barriereschicht E) ist mit Hilfe einer Haftvermittler D) bzw. F) an ihrer jeweiligen Oberfläche mit der Verbindungsschicht C) bzw. mit der Oberflächenschutzschicht G) verbunden. Als Material wird dafür vorzugsweise ein Propylencopolymer bzw. ein Polyethylen, das mit Maleinsäureanhydrid gepfropft ist, verwendet.

Die Oberflächenschutzschicht G) ist vorzugsweise siegelfähig und/oder peelfähig. Daher wird zur Herstellung dieser Schicht vorzugsweise ein Polyethylen niedriger Dichte (LDPE) mit einem Schmelzindex (MFI) im Bereich von 0,5 bis 8,0 g/10 min, vorzugsweise im Bereich von 1 bis 5 g/10 min (2,16 kg, 190°C gemessen gemäß ASTM D1238) oder ein lonomerpolymer, wie z. B. ein Copolymer aus einem α-Olefin und einem ethylenisch ungesättigten Monomeren mit einer Carboxylgruppe, wobei die Carboxylgruppen in einer Menge von 20 bis 100 Gew.% als Metallsalz, vorzugsweise als Zinksalz, vorliegen oder einem Ethylen-Vinylacetatcopolymer mit einem Vinylacetatgehalt von 3 bis 10 Gew.%, vorzugsweise 4 bis 6 Gew.%, zur Herstellung der siegelfähigen Schicht verwendet.

Gemäß einer besonders bevorzugten Ausführungsform ist die Siegelschicht auch peelfähig. Dafür wird als Schichtmaterial vorzugsweise eine Mischung aus LDPE und einem Polybutylen (PB) verwendet. Die Mischung enthält dafür 15 bis 30 Gew.%, vorzugsweise 20 bis 28 Gew.%, Polybutylen, Vorzugsweise weist das Polybutylen einen Schmelzindex (MFI) im Bereich von 0,3 bis 2,0 g/10 min (190°C und 216 kg gemäß ASTM 1238) auf.

Vorzugsweise liegt die Dicke der Oberflächenschicht im Bereich von 10 bis 50 µm, vorzugsweise von 15 bis 30 µm.

Wenn LDPE als Polymer zur Herstellung der Siegelschicht verwendet wird und der erfindungsgemäße Mehrschichtfilm umfaßt eine Barriereschicht, dann ist in aller Regel zur Verbindung der Barriereschicht und der Siegelschicht eine Haftvermittlerschicht notwendig, sofern nicht als Barriereschichtmaterial Ethylen-Vinylalkoholcopolymer verwendet wird. Als Haftvermittlermaterial kann ein Polyolefin, vorzugsweise ein Polyethylen gepfropft mit Maleinsäureanhydrid, verwendet werden. Es ist aber auch möglich, eine Mischung aus LDPE und LLDPE im Verhältnis 3:1 bis 4:1 als Haftvermittlermittel zu verwenden. Die Dicke der jeweiligen Haftvermittlerschicht liegt im Bereich von 2 bis 8 µm, vorzugsweise im Bereich von 3 bis 6 µm.

Die Oberflächenschicht G) kann übliche und bekannte Gleitmittel und Antiblockmittel, wie z. B. Erukasäureamid, Polyalkylsiloxane, wie z. B. Polydimethylsiloxan und/oder Siliciumdioxid enthalten. Alle oder nur einzelne Schichten können Stabilisatoren und weitere Additive bekannter Art enthalten.

Außerdem kann die Schicht B) 0,5 bis 2 Gew.% eines weißen Pigmentes, wie z. B. Kaolin, Kalziumcarbonat, Talk, Titandioxid oder deren Mischungen enthalten. Solche anorganischen Pigmente werden dem Polymer, aus dem die Schicht B) gefertigt wird, vorzugsweise in Form von Masterbatch, das 30 bis 50 Gew.% Pigmente enthält, zugegeben. Außerdem kann die Schicht B) bis zu 30 Gew.% aus recycliertem erfindungsgemäßen Mehrschichtfilmmaterial bestehen.

Die erfindungsgemäßen Mehrschichtfilme werden vorzugsweise durch das übliche Folienblascoextrusionsverfahren oder durch Coextrusiongießfilmverfahren, soweit es die Sequenz der Schichten C) bis G) betrifft, hergestellt und vorzugsweise durch einen Extrusionlaminierungsschritt mit der Polypropylen Schaumschicht A) verbunden. Dazu wird die Schaumschicht A) und der Mehrschichtfilm, bestehend aus den Schichten C) bis G), so zusammengeführt, daß dazwischen die Schicht B) extrudiert wird. Unmittelbar nach der Extrusion wird auf das so hergestellte Laminat ein genügend großer Druck ausgeübt, damit die Schichten A) bis G) ausreichend miteinander verbunden werden.

Es ist aber auch möglich, die erfindungsgemäßen Mehrschichtfilme durch Coextrusion herzustellen, wobei auch die Schaumschicht A) gleichzeitig mit den übrigen Schichten ggf. unter Weglassung der Schicht C) coextrudiert und im Falle der Schicht A) expandiert wird.

Die erfindungsgemäßen Mehrschichtfilme haben eine ausgezeichnete Thermoverformbarkeit auf sogenannten FFS-Maschinen (Form-, Füll- und Siegelmaschinen) und können auf diesen Maschinen zu Verpackungsbehältern, vorzugsweise Tiefziehmulden, verarbeitet werden, die auch gefüllt und versiegelt werden. Es war überraschend, daß die erfindungsgemäßen Mehrschichtmaterialien nicht nur ausgezeichnet auf den FFS-Maschinen verarbeitet werden können, sondern auch mit erhöhter Geschwindigkeit zu Verpackungsartikeln, insbesondere zu Tiefziehmulden, im Vergleich zu bekannten Mehrschichtverpackungsmaterialien verformt werden können.

Die erfindungsgemäßen Mehrschichtfilme zeigen auch, trotz Reduzierung ihrer Gesamtdicke gegenüber den bekannten, vergleichbaren Verpackungsmaterialien, eine unerwartete Verbesserung der mechanischen Eigenschaften, wie der Bruchdehnung, und der Steifigkeit des E-Moduls. Diese deutliche Verbesserung zeigt sich, ohne daß eine Erhöhung der Dicke der Mehrschichtfilme, die aus dem Stande der Technik bekannt sind, notwendig ist. Überraschenderweise sind die mechanischen Eigenschaften sogar noch verbessert, obwohl eine Reduzierung der Gesamtdicke des Mehrschichtverpackungsmaterials erfolgt ist.

Ein weiterer Gegenstand der vorliegenden Erfindung ist daher auch die Verwendung der erfindungsgemäßen mehrschichtigen Filme als Verpackungsmaterial, vorzugsweise auf Form-, Füll- und Siegelmaschinen (FFS-Maschinen), zur Verpackung von Lebensmitteln, insbesondere zur Verpackung von leicht verderblichen Lebensmitteln, wie Fleisch, Schinken oder Aufschnitt. Da die Verpackung auf diesen Maschinen oft diskontinuierlich durchgeführt wird, um unterschiedliche Güter zu verpacken, muß das Verpackungsmaterial auch ein relativ breites, sogenanntes Thermoformfenster aufweisen, in dem es thermoverformt werden kann. Dies ist bei dem erfindungsgemäßen Verpackungsmaterial gegeben, da es eine ausgezeichnete Thermoverformbarkeit, insbesondere eine Tiefziehverformbarkeit, aufweist.

Die thermoverformten, vorzugsweise tiefgezogenen Verpackungsartikel, wie z. B. Tiefziehmulden, die aus den erfindungsgemäßen Mehrschichtmaterialien hergestellt wurden, können nach ihrem Befüllen mit bekannten Deckelfolien versiegelt werden. Als Deckelfolien eignen sich Mehrschichtfilme, vorzugsweise aus Polyethylenterephtalat/SiOₓ/Haftvermittlerschicht/Polyethylen niedriger Dichte oder aus Polyethylenterephthalat/Haftvermittlerschicht/Polyethylen/Haftvermittlerschicht/Ethylen-Vinylalkoholcopolymer/Haftvermittlerschicht/Polyethylen.

Von den genannten Deckelfolien eignen sich insbesondere die erstgenannten Mehrschichtfilme. Dazu wird das biaxial orientierte Polyethylenterephtalat mit SiOₓ durch Plasmavakuumtechnik beschichtet. Mit Hilfe eines Haftvermittlers wird anschließend der bereits gefertigte Polyethylenfilm darauf laminiert. Eine solche Deckelfolie zeichnet sich insbesondere durch eine ausgezeichnete Transparenz und hohe Bruchfestigkeit aus. Außerdem zeigen Verpackungen, die eine solche Deckelfolie aufweisen, eine ausgezeichnete Gasbarriere.

In den nachfolgenden Beispielen wird der E-Modul gemäß DIN 43457 in Maschinenrichtung bzw. in deren Querrichtung bestimmt. Außerdem wurde die Dehnung bis zum Bruch sowohl in Maschinenrichtung als auch in der Querrichtung dazu gemäß DIN 53455 bestimmt.

### Beispiele:

### Beispiel 1

Ein erfindungsgemäßer Mehrschichtfilm mit folgenden Schichtaufbau:
- Schicht A): eine Schaumschicht mit einer Dichte von 0,3 g/cm³ und einer Zellenzahl von 120 Zellen/mm³ aus einer Mischung von 50 Gew.% Polypropylen mit einer Langkettenverzweigung (High-melt-strength polypropylen) und 50 Gew.% eines heterophasigen Propylenethylenblockcopolymeren,
- Schicht B): aus 100 Gew.% eines heterophasigen Blockpropylenethylencopolymer, das auch zum Aufbau der Schaumschicht A) eingesetzt wurde,
- Schicht C): aus einem Polypropylen,
- Schicht D): aus einem Haftvermittler auf Basis von Polypropylen gepfropft mit Maleinsäureanhydrid,
- Schicht E): als Gasbarriereschicht besteht aus einem Ethylen-Vinylalkoholcopolymeren,
- Schicht F): als Haftvermittlerschicht mit demselben Aufbau wie Schicht D),
- Schicht G): als Siegelschicht basierend auf Polyethylen niedriger Dichte.

Der mehrschichtige Film wird durch Coextrusion hergestellt.

Die Dicke der einzelnen Schichten ist Tabelle 1 zu entnehmen.

**Tabelle 1**

| Schicht | A) | B) | C) | D) | E) | F) | G) | Gesamt |
|---|---|---|---|---|---|---|---|---|
| Dicke in µm | 800 | 160 | 15 | 5 | 5 | 5 | 20 | 1010 |

Die mechanischen Eigenschaften dieses Films sind Tabelle 3 zu entnehmen.

### Vergleichsbeispiel:

Entsprechend dem mehrschichtigen Film gemäß Beispiel 1 wurde ein mehrschichtiger Film mit identischer Schichtfolge und identischen Schichtzusammensetzungen, aber mit unterschiedlichen Schichtdicken hergestellt.

Die Dicke der einzelnen Schichten dieses mehrschichtigen Films sind Tabelle 2 zu entnehmen.

**Tabelle 2**

| Schicht | A) | B) | C) | D) | E) | F) | G) | Gesamt |
|---|---|---|---|---|---|---|---|---|
| Dicke in µm | 1160 | 40 | 15 | 5 | 5 | 5 | 20 | 1250 |

Die mechanischen Eigenschaften des Mehrschichtfilms gemäß dem Vergleichsbeispiels sind Tabelle 3 zu entnehmen.

**Tabelle 3**

| | | Einheit | Beispiel 1 | Vergleichsbeispiel |
|---|---|---|---|---|
| E-Modul | (Maschinenrichtung) | N/mm² | 788 | 564 |
| E-Modul | (Querrichtung) | N/mm² | 584 | 426 |
| Bruchdehnung | (Maschinenrichtung) | N/mm² | 10,2 | 6,9 |
| Bruchdehnung | (Querrichtung) | N/mm² | 8,4 | 5,6 |

Aus der Tabelle 3 ergibt sich, daß die erfindungsgemäßen Mehrschichtfilme weit bessere mechanische Werte aufweisen, obwohl die Gesamtdicke des Films geringer ist als die des bekannten Verpackungsmaterials. Dementsprechend eignen sich die erfindungsgemäßen Mehrschichtfilme weit besser zur Herstellung von selbsttragenden Verpackungsartikeln, insbesondere Tiefziehmulden.

## Patentansprüche

1. Ein Mehrschichtenfilm umfassend folgende Schichtenfolge:
A) eine Basisschicht aus geschäumten Propylen-, Homo- und/oder Copolymeren oder deren Mischungen
B) eine Schicht bestehend aus wenigstens einem Polyolefin der Schaumschicht A)
C) ggf. eine Verbindungsschicht basierend auf einem Polyolefin,
D) ggf. eine Haftvermittlerschicht,
E) ggf. eine gas- und/oder aromadichte Barriereschicht,
F) eine Haftvermittlerschicht,
G) eine ggf. siegelfähige und/oder peelfähige Oberflächenschicht
wobei die Gesamtdicke der Schichten A) und B) im Bereich von 0,5 bis 2 mm und die Dicke der Schicht B) im Bereich von ¹/₆ bis ½ der Dicke der Schicht A) liegt.

2. Ein Film nach Anspruch 1, **dadurch gekennzeichnet, daß** die Gesamtdicke der Schichten A) und B) im Bereich von 0,6 bis 1,4 mm liegt.

3. Ein Film nach Anspruch 1 oder 2, **dadurch gekennzeichnet, daß** die Dicke der Schicht B) im Bereich von ¹/₆ bis ¹/₃ der Dicke der Schicht A) liegt.

4. Ein Film nach einem oder mehreren Ansprüchen 1 bis 3, **dadurch gekennzeichnet, daß** die Schicht A) aus einer geschäumten Mischung aus Polypropylen mit Langkettenverzweigung und einem Propylenethylenblockcopolymeren besteht.

5. Ein Film nach einem oder mehreren Ansprüchen 1 bis 4, **dadurch gekennzeichnet, daß** die Schicht B) aus Polypropylen oder einem Propylenethylencopolymer besteht.

6. Ein Film nach einem oder mehreren Ansprüchen 1 bis 5, **dadurch gekennzeichnet, daß** die Schicht C) aus einem Polyolefin, das auf demjenigen Monomer basiert, das das Hauptmonomer des Polyolefins der Schaumschicht A) ist.

7. Ein Film nach Anspruch 6, **dadurch gekennzeichnet, daß** das Polyolefin Polypropylen ist.

8. Ein Film nach einem oder mehreren der Ansprüche 1 bis 7, **dadurch gekennzeichnet, daß** die Schicht E) aus einem Ethylenvinylalkoholcopolymeren besteht.

9. Ein Film nach einem oder mehreren der Ansprüche 1 bis 8, **dadurch gekennzeichnet, daß** die Schicht G) aus einem siegelfähigen Polymeren besteht und ggf. die üblichen Additive enthält.

10. Ein Film nach Anspruch 9, **dadurch gekennzeichnet, daß** die Schicht G) aus einem Polyethylen niedriger Dichte oder einem lonomer besteht.

11. Ein Film nach einem oder mehreren der Ansprüche 1 bis 10, **dadurch gekennzeichnet, daß** die Schicht G) aus peelfähigen Polymeren besteht und ggf. die üblichen Additive enthält.

12. Ein Film nach Anspruch 11 **dadurch gekennzeichnet, daß** die Schicht G) aus einer Mischung aus Polyethylen niedriger Dichte und einem Polybutylen besteht.

13. Ein Film nach einem oder mehreren der Ansprüche 1 bis 12, **dadurch gekennzeichnet, daß** die Gesamtdicke der Schichten C) bis G) 20 bis 70 µm beträgt.

14. Ein Film nach Anspurch 13, **dadurch gekennzeichnet, daß** die Gesamtdicke 30 bis 50 µm beträgt.

15. Verwendung des Filmes gemäß einem oder mehreren der Ansprüche 1 bis 14 als Verpackungsmaterial.

16. Verpackungsbehälter aus einem Film gemäß einem oder mehreren der Ansprüche 1 bis 14.

17. Verpackungsmulde aus einem Film nach einem oder mehreren der Ansprüche 1 bis 14.

18. Verpackungsbehälter nach Anspruch 16 oder 17 zur Verpackung von Nahrungsmitteln.

19. Verpackungsbehälter nach Anspruch 18 zum Verpacken von Fleisch, Wurst, Käse.

20. Verwendung eines Filmes gemäß einem oder mehreren der Ansprüche 1 bis 14 als Verpackungsmaterial auf Form-, Füll- und Siegelpackungsmaschinen.

## Claims

1. A multilayer film comprising the following sequence of layers:
A) a base layer made of foamed propylene homo- and/or copolymers or mixtures thereof;
B) a layer consisting of at least one polyolefin of foam layer A);
C) an optional bonding layer based on a polyolefin;
D) an optional adhesion-promoting layer;
E) an optional gas-tight and/or odorproof barrier layer;
F) an adhesion-promoting layer;
G) an optionally sealable and/or peelable surface layer;
the overall thickness of layers A) and B) ranging from 0.5 to 2 mm, and the thickness of layer B) ranging from ¹/₆ to ½ the thickness of layer A).

2. The film according to claim 1, **characterized in that** the overall thickness of layers A) and B) ranges from 0.6 to 1.4 mm.

3. The film according to claim 1 or 2, **characterized in that** the thickness of layer B) ranges from ¹/₆ to ¹/₃ the thickness of layer A).

4. The film according to one or more of claims 1 to 3, **characterized in that** layer A) is comprised of a foamed mixture of long-chain branched polypropylene and a propylene-ethylene block copolymer.

5. The film according to one or more of claims 1 to 4, **characterized in that** layer B) is comprised of polypropylene or of a propylene-ethylene copolymer.

6. The film according to one or more of claims 1 to 5, **characterized in that** layer C) is comprised of a polyolefin based on that monomer which represents the main monomer of the foam layer A) polyolefin.

7. The film according to claim 6, **characterized in that** the polyolefin is polypropylene.

8. The film according to one or more of claims 1 to 7, **characterized in that** layer E) is comprised of an ethylene-vinyl alcohol copolymer.

9. The film according to one or more of claims 1 to 8, **characterized in that** layer G) is comprised of a sealable polymer and optionally includes standard additives.

10. The film according to claim 9, **characterized in that** layer G) is comprised of a low-density polyethylene or of an ionomer.

11. The film according to one or more of claims 1 to 10, **characterized in that** layer G) is comprised of a peelable polymer and optionally includes standard additives.

12. The film according to claim 11, **characterized in that** layer G) is comprised of a mixture of low-density polyethylene and a polybutylene.

13. The film according to one or more of claims 1 to 12, **characterized in that** the overall thickness of layers C) through G) is from 20 to 70 µm.

14. The film according to claim 13, **characterized in that** the overall thickness is from 30 to 50 µm.

15. Use of the film according to one or more of claims 1 to 14 as packaging material.

16. A packaging container made of a film according to one or more of claims 1 to 14.

17. A packaging tray made of a film according to one or more of claims 1 to 14.

18. The packaging container according to claim 16 or 17, to be used in packaging foods.

19. The packaging container according to claim 18, to be used in packaging meat, sausages, and cheese.

20. Use of the film according to one or more of claims 1 to 14 as packaging material on forming, filling and sealing packaging machines.

## Revendications

1. Film à plusieurs couches comportant la série de couches suivante :
A) une couche de fond constituée d'un homo- et/ou d'un copolymère de propylène expansé ou de leurs mélanges,
B) une couche composée d'au moins un polyoléfine de la couche expansé A),
C) éventuellement une couche de liaison à base d'un polyoléfine,
D) éventuellement une couche d'agent de pontage,
E) éventuellement une couche barrière étanche aux gaz et/ou aux arômes,
F) une couche d'agent de pontage,
G) une couche superficielle éventuellement scellable et/ou décollable,
dans lequel l'épaisseur totale des couches A) et B) est de 0,5 à 2 mm et l'épaisseur de la couche B) est de 1/6^{ème} à 1/2 de la couche A).

2. Film selon la revendication 1, **caractérisé en ce que** l'épaisseur totale des couches A) et B) est de 0,6 à 1,4 mm.

3. Film selon la revendication 1 ou 2, **caractérisé en ce que** l'épaisseur de la couche B) est de 1/6^{ème} à 1/3 de la couche A).

4. Film selon une ou plusieurs des revendications de 1 à 3, **caractérisé en ce que** la couche A) est constituée d'un mélange expansé de polypropylène ramifié à longue chaîne et d'un copolymère séquencé propylène-éthylène.

5. Film selon une ou plusieurs des revendications de 1 à 4, **caractérisé en ce que** la couche B) est constituée de polypropylène ou d'un copolymère propylène-éthylène.

6. Film selon une ou plusieurs des revendications de 1 à 5, **caractérisé en ce que** la couche C) est constituée en un polyoléfine à base d'un monomère qui est le monomère principal du polyoléfine de la couche expansée A).

7. Film selon la revendication 6, **caractérisé en ce que** le polyoléfine est du polypropylène.

8. Film selon une ou plusieurs des revendications de 1 à 7, **caractérisé en ce que** la couche E) est constituée d'un copolymère éthylène-alcool vinylique.

9. Film selon une ou plusieurs des revendications de 1 à 8, **caractérisé en ce que** la couche G) est constituée d'un polymère scellable et contient éventuellement les additifs habituels.

10. Film selon la revendication 9, **caractérisé en ce que** la couche G) est composée d'un polyéthylène de basse densité ou d'un ionomère.

11. Film selon une ou plusieurs des revendications de 1 à 10, **caractérisé en ce que** la couche G) est constituée d'un polymère décollable et contient éventuellement les additifs habituels.

12. Film selon la revendication 11, **caractérisé en ce que** la couche G) est composée d'un mélange de polyéthylène à basse densité et d'un polybutylène.

13. Film selon une ou plusieurs des revendications de 1 à 12, **caractérisé en ce que** l'épaisseur totale des couches C) à G) est comprise entre 20 et 70 µm.

14. Film selon la revendication 13, **caractérisé en ce que** l'épaisseur totale est de 30 à 50 µm.

15. Utilisation du film selon une ou plusieurs des revendications de 1 à 14 en tant que matériau d'emballage.

16. Cuvette d'emballage constituée d'un film selon une ou plusieurs des revendications de 1 à 14.

17. Barquette d'emballage constituée d'un film selon une ou plusieurs des revendications de 1 à 14.

18. Cuvette d'emballage selon la revendication 16 ou 17 destinée à emballer des produits alimentaires.

19. Cuvette d'emballage selon la revendication 18 destinée à emballer de la viande, de la charcuterie, du fromage.

20. Utilisation d'un film selon une des revendications de 1 à 14 en tant que matériau d'emballage dans des machines d'emballage à mouler, à remplir et à sceller.
